# EUROPÄISCHE PATENTSCHRIFT

(11) **EP 0 641 416 B1**
(45) Veröffentlichungstag und Bekanntmachung des Hinweises auf die Patenterteilung: **04.12.1996**
(21) Anmeldenummer: 93903884.0
(22) Anmeldetag: 28.01.1993
(51) Int. Cl.: F04B 43/08, F16C 3/22, F16C 3/10

(54) **SCHLAUCHPUMPE**
HOSE PUMP
POMPE TUBULAIRE

(30) Priorität: 29.04.1992 DE 9205733 U
(43) Veröffentlichungstag der Anmeldung: 08.03.1995
(73) Patentinhaber: Mastermark Corporation, Louisville, Kentucky 40299-2277 (US)
(72) Erfinder: MAGNUS, Eberhard, D-5630 Remscheid 1 (DE)
(74) Vertreter: Rieder, Hans-Joachim, Dr.
(86) Internationale Anmeldenummer: EP9300187
(87) Internationale Veröffentlichungsnummer: WO9322558

(56) Entgegenhaltungen:
- CH-A- 548 551
- DE-A- 2 543 300

## Beschreibung

Die Erfindung bezieht sich auf eine Schlauchpumpe mit in Erstreckungsrichtung des Schlauches hintereinander angeordneten Schiebern, welche mit ihrer Stirnfläche den Schlauch in rhythmischem Wechsel beaufschlagen und von winkelversetzt zueinander angeordneten Exzenterscheiben gesteuert sind, die um eine gemeinsame Achse drehen.

Eine Schlauchpumpe dieser Art ist durch die DE-OS 25 43 300 bekannt. Die rhythmisch gesteuerten Schieber fungieren als Walkmittel. Sie drücken durch eine entsprechende Wellenstruktur die vom Restvorrat exakt abgetrennte Teilmenge schonend aus. Das ganze beruht auf einer präzisen Ausbildung und Zuordnung der Exzenterscheiben zueinander. Die Exzenterscheiben sind exzentrisch gebohrt. Die so geschaffenen Löcher nehmen eine alle Scheiben durchsetzende, körperliche Achse auf. Die Drehsicherung wird durch abseits liegende, die Fuge zwischen den Exzenterscheiben übergreifende Verbindungszapfen erreicht. Pro Exzenterscheibe sind zwei radial gleich beabstandete, querschnittsangepaßte Durchbrechungen realisiert. Gesichert wird die Stapellage der Exzenterscheiben durch endseitige Schraubhülsen d.h. von diesen gebildeten Stützschultern.

Aufgabe der Erfindung ist es, das zentrale Steuerelement einer solchen Schlauchpumpe, die sogenannte Exzenterwelle unter Verringerung der Einzelteile baulich zu vereinfachen, ohne die gewohnte Präzision zu verringern, dies alles bei Erzielung eines montagegünstigen Grundkonzepts.

Gelöst ist diese Aufgabe durch die im Anspruch 1 angegebene Erfindung.

Die Unteransprüche sind vorteilhafte Weiterbildungen der erfindungsgemäßen Schlauchpumpe.

Zufolge solcher Ausgestaltung ist eine gattungsgemäße Schlauchpumpe vereinfachter Bauform erzielt. Die körperliche Achse als Präzisions-Drehteil kommt in Fortfall. Die Achsenausbildung wird von den Exzenterscheiben übernommen. Auf diese Weise liegt durch Addition der Exzenterscheiben auch jeweils die erforderliche Endlänge vor; es brauchen also keine Achsen unterschiedlicher Länge bereitgehalten zu werden. Konkret ist dabei so vorgegangen, daß die gemeinsame Achse von Achsstummeln gebildet ist, die jeweils auf der einen Seite einer Exzenterscheibe vorstehen und in korrespondierende Vertiefungen der jeweils benachbart liegenden Exzenterscheibe eintreten. Dabei begibt sich durch die Aufeinanderlage der Exzenterscheiben eine tragende Abstützung Seite an Seite; es kommt nicht zu irgendwelchen Verkippungen, selbst bei größeren Stapel längen liegt eine zufriedenstellende Koaxialität der einzelnen sich zur geometrischen Achse addierenden Stücke vor. Materialmäßig treten überdies keine Verluste auf, da sich die den Achsstummel schaffende Materialanhäufung im wesentlichen aus dem Volumen der Vertiefung ergibt. Konsequent sind die Achsstummel den zweckmäßig sogar aus Kunststoff bestehenden Exzenterscheiben materialeinheitlich angeformt. Dies kann im Spritzverfahren unter Benutzung hochkristallinen Kunststoffs geschehen, wobei weiter die Achsstummel benachbart liegen zu ebenfalls materialeinheitlich angeformten Steckzapfen, die zur Fesselung der winkelversetzten Anordnung der Exzenterscheiben jeweils in Löcher benachbarter Exzenterscheiben eintreten. Bezüglich des sparsamen Materialverbrauchs wird auf den vorangegangenen Hinweis Bezug genommen. Andererseits kann einer Scherwirkung bei größeren zu erwartenden Belastungen der Exzenterscheiben einfach dadurch Rechnung getragen werden, daß mit zwei und mehr Steckzapfen und korrespondierenden Löchern gearbeitet wird. Um beispielsweise ungünstigen Toleranzpaarungen der miteinander steckverbundenen Exzenterscheiben zu begegnen, wird weiter vorgeschlagen, daß der Überstand der Achsstummel kleiner ist als die Tiefe der sie aufnehmenden Vertiefungen. Das gilt sinngemäß auch für die Steckzapfen und Löcher. Etwaige Grate werden so unwirksam. Die flächige Aneinanderlage der Exzenterscheibe Seite an Seite ist so garantiert. Lagerungstechnisch liegt eine vorteilhafte Ausgestaltung der so geschaffenen Exzenterwelle vor, wenn die Exzenterscheiben endständigen Abschlußscheiben zugeordnet sind, von denen die eine koaxial zur Vertiefung einen Lagerzapfen und die andere in koaxialer Gegenüberlage zum Achsstummel ebenfalls einen Achszapfen aufweist. Die axiale Sicherung bzw. Verspannung des durch Stapelung gebildeten Exzenterscheiben-Pakets ist durch Abstützung der äußeren Breitflächen der Abschlußscheiben an Lagerwänden der Lagerzapfen erzielt. Entsprechende Lagerwände fungieren so als Lagerschilde beispielsweise eines Einsatzgehäuses der Schlauchpumpe. Eine Optimierung der Exzenterwellenausbildung wird schließlich erreicht durch eine Mehrkantigkeit der Achsstummel und angepaßte Mehrkantigkeit des Querschnitts der Vertiefungen. So können die Achsstummel selbst die Drehsicherung übernehmen. Dabei kann eine Sechskantgestalt der Achsstummel greifen, die in einen entsprechenden Innensechskant als Vertiefung eintaucht. Montageerleichternd wirkt sich dabei die Anwendung eines Reibsitzes aus. Um das Herzstück einer solchen Schlauchpumpe rasch auf unterschiedliche Walkprofile umstellen zu können, ohne dabei die gesamte Schlauchpumpe demontieren zu müssen, wird vorgeschlagen, daß die übereinander angeordneten Exzenterscheiben und die Schieber durch beiderends angeordnete Lagerwände zu einem Paket zusammengefaßt sind, welches über eine Schienenführung der einen Schlitten bildenden Lagerwände aus dem Einsatzgehäuse herausziehbar ist. Das erfordert nur einen Bruchteil des früher notwendigen Zeitaufwandes bei Umrüstung und stellt eine Maßnahme von sogar eigenständiger Bedeutung dar. Außerdem wirkt sich dieser Grundaufbau montageerleichternd aus. Schließlich gestalten sich etwaige Reparaturarbeiten wesentlich leichter. Um dabei den Antriebsweg unverändert lassen zu können, ist eine selbsttätige Trennung des Exzenterscheiben-Drehantriebrades bei Herausnahme des Paketes berücksichtigt; d.h., im Herausziehweg befindet sich kein Antriebszwischenglied, sei es Scheibe oder Zahnrad. Die Funktionsstellung des Paketes wird dagegen sicher aufrechterhalten durch eine die Lagerwände gegen Herausziehen blockierende Sperre. Erst nach willensbetonter Aufhebung dieser Sperre ist die angesprochene Verlagerung vollziehbar. In baulich vorteilhafter Weise ist die Sperre als Riegelplatte ausgebildet. Eine besonders gebrauchssichere Ausgestaltung liegt vor, wenn beide übereinander angeordnete Lagerwände durch je eine solche plattenförmig ausgebildete Sperre gesichert sind. Um auch nach dem Herausziehen des Pakets ein Auseinanderfallen der vielen ineinander gesteckten Funktionsteile zu vermeiden, schlägt die Erfindung einen die Exzenterscheiben durchsetzenden Lagerwände-Verbindungsstab vor, der bis in die Lagerwände reicht. So bleiben Exzenterscheiben und Schieber beisammen; vor allen Dingen wird der wendelförmige Versatz der Exzenterscheiben zueinander nicht aufgehoben. Vorzugsweise wird der Zusammenhalt durch reibungsschlüssige Verbindung zwischen dem Verbindungsstab und den Lagerwänden aufrechterhalten. Es kann sich hier um eine Art Klemmpassung handeln, also eine Edelpassung, welche nur durch Einsatz höherer axialer Trennkräfte das Zerlegen des Pakets erlaubt. Zur Unterbringung ist der Bereich der Achsstummel der Exzenterscheiben genutzt. Diese sind zentral durchbrochen, so daß der Verbindungsstab in der gemeinsamen Achse der Exzenterscheiben verläuft. Er sichert die entsprechende Ausrichtung der Scheiben als zusätzlicher Indexer. Schließlich besteht noch ein vorteilhaftes Merkmal der Erfindung darin, daß die Schienen der Schienenführungen an am Einsatzgehäuse festlegbaren Lagerführungsplatten ausgebildet sind. Solche Lagerführungsplatten sind der ortsfeste Teil der Lagerwände und tragen zur Stabilität des Einsatzgehäuses bei. Endlich erweist es sich als vorteilhaft, daß die Stirnenden der Lagerführungsplatten Halteschrauben für die Riegelplatte tragen. Die Riegelplatten brauchen einfach über die Schraubschäfte gelegt zu werden. Es erfolgt dann das Anziehen der Schrauben unter Festklemmen der Riegelplatte bzw. Platten mittels der Schraubenköpfe.

Der Gegenstand der Erfindung ist, was die Exzenterscheibenausbildung betrifft, nachstehend anhand zweier zeichnerisch veranschaulichter Ausführungsbeispiele näher erläutert und was die Ausbildung eines schlittengeführten Pakets angeht, durch ein Ausführungsbeispiel erläutert. Es zeigt:
- Fig. 1: die erfindungsgemäße ausgebildete Schlauchpumpe mit zur freien Einsicht teildemontiertem Einsatzgehäuse, gemäß dem ersten Ausführungsbeispiel,
- Fig. 2: die Stirnansicht hierzu,

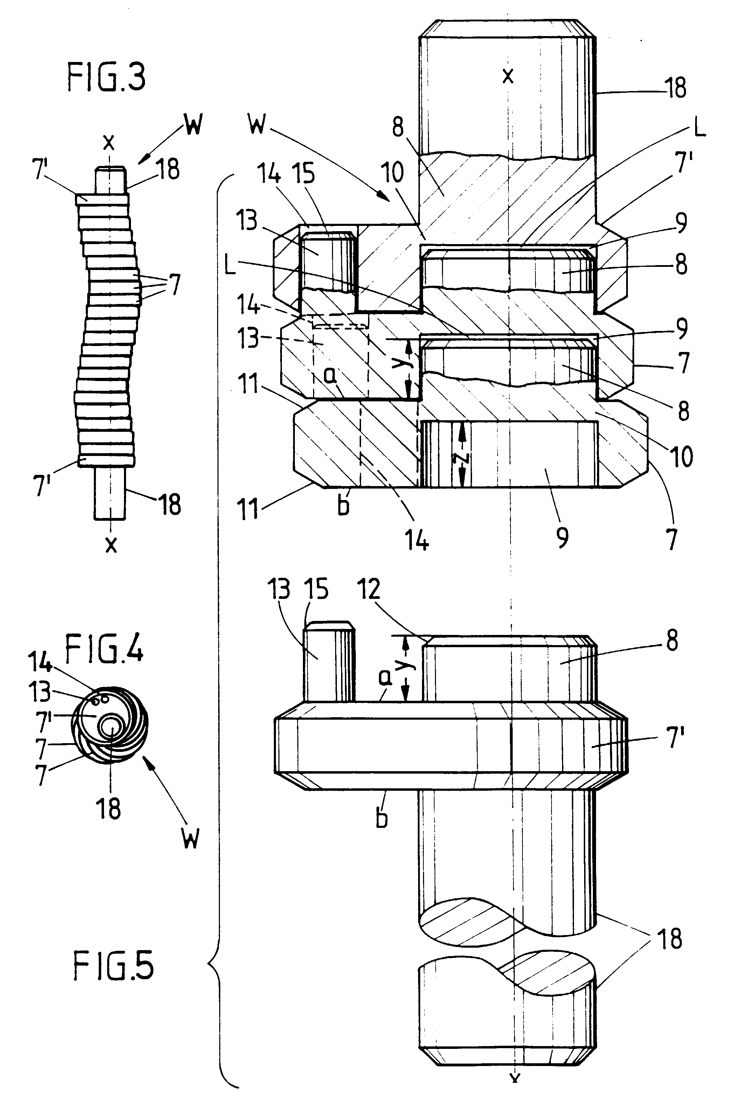

- Fig. 3: die der Schlauchpumpe einverleibte Exzenterwelle in Einzeldarstellung, und zwar in Seitenansicht,
- Fig. 4: die Draufsicht hierzu,
- Fig. 5: die Exzenterwelle in stark vergrößerter Wiedergabe, partiell geschnitten, darstellungsmäßig auf zwei Exzenterscheiben und zwei endständig liegende Abschlußscheiben begrenzt,
- Fig. 6: die Draufsicht auf Figur 5, bei weggelassener Abschlußscheibe,
- Fig. 7: eine Exzenterscheibe in perspektivischer Darstellung,
- Fig. 8: die Exzenterwelle in Einzeldarstellung, gemäß dem dem zweiten Ausführungsbeispiel.
- Fig. 9: die Draufsicht hierzu,
- Fig. 10: die Exzenterwelle in vergrößerter Wiedergabe, partiell aufgebrochen, wiederum nur zwei Exzenterscheiben und die zugehörigen Abschlußscheiben darstellend,
- Fig. 11: die Draufsicht auf Figur 5, und zwar nunmehr auf die Abschlußscheibe gesehen,
- Fig. 12: die Exzenterscheibe gemäß zweitem Ausführungsbeispiel in perspektivischer Darstellung,
- Fig. 13: die erfindungsgemäß ausgebildete Schlauchpumpe mit zur freien Einsicht teildemontiertem Einsatzgehäuse mit herausziehbarem Schieber-Paket, in funktionsgerechter Grundstellung desselben,
- Fig. 14: die gleiche Darstellung, jedoch bei Herausziehen des Schieber-Pakets,
- Fig. 15: die Stirnansicht zu Figur 13,
- Fig. 16: die Draufsicht hierzu, jedoch bei weggeschnittener Toppartie der Schlauchpumpe,
- Fig 17: die gleiche Draufsicht, jedoch bei Herausziehen des Schieber-Pakets,
- Fig. 18: eine Darstellung wie Figur 15, jedoch im Bereich der Lagerwände, Lagerführungsplatten und Enden des Verbindungsstabes aufgeschnitten,
- Fig. 19: eine Draufsicht auf eine einzelne Exzenterscheibe, unter Verdeutlichung einer Durchbrechung für den Verbindungsstab,
- Fig. 20: den Schnitt gemäß Linie XX-XX in Figur 19,
- Fig. 21: das Schieber-Paket in Explosionsdarstellung,
- Fig. 22: die obere Lagerführungsplatte im Vertikalschnitt und
- Fig. 23: die untere Lagerführungsplatte im Vertikalschnitt.

Die dargestellte Schlauchpumpe umfaßt eine Exzenterwelle W, ein sie lagerndes Einsatzgehäuse 1 sowie einen aus einer Vielzahl einzelner Schieber 2 gebildeten Lamellenblock als Walkmittel.

Die entsprechende Walkkontur ist gebildet von den freistehenden Stirnflächen 3 der zu einem Platten-Paket geschichteten Schieber 2. Diese freistehenden Stirnflächen 3 treten in rhythmischem Wechsel quer gegen einen Schlauch 4.

Der Schlauch 4 durchsetzt eine vertikal gerichtete Aufnahmekammer 5. Letztere wird frontseitig begrenzt durch eine zugleich als Tür gestaltete Stützwand 6. Diese weist schlauchseitig eine abgefederte, vorzugsweise vertikal genutete Anlageplatte auf. Die Federbelastung ist auf die Stirnflächen 3 zu gerichtet.

Die Exzenterwelle W läßt sich entsprechend der gewünschte Walzkontur aus einzelnen Exzenterscheiben 7 zusammenstellen derart, daß eine obere Abschnürung 4' und eine untere Abschnürung 4" des Schlauches 4 bewirkt wird, deren vertikaler Abstandszone die vom nicht dargestellten Vorrat abgezweigt Dosiermenge in Richtung des Pfeiles x' gefördert wird. Die wendelförmig ausladenden Exzenterscheiben 7 drehen um eine gemeinsamen geometrische Achse x-x. Diese erstreckt sich, wie auch der Schlauchverlauf, vertikal.

Die gemeinsame Achse x-x ergibt sich aus einer in dieser vertikalen Richtung koaxialen Addition von Achsstummeln 8. Dazu ist jeder Exzenterscheibe 7 auf der einen Seite a ein solcher Achsstummel 8 angeformt. Er ist hier zylindrisch. Dieser Achsstummel 8 greift in eine passende Vertiefung 9 auf der anderen Seite b der jeweils benachbarten, hier darüber liegenden Exzenterscheibe 7 ein.

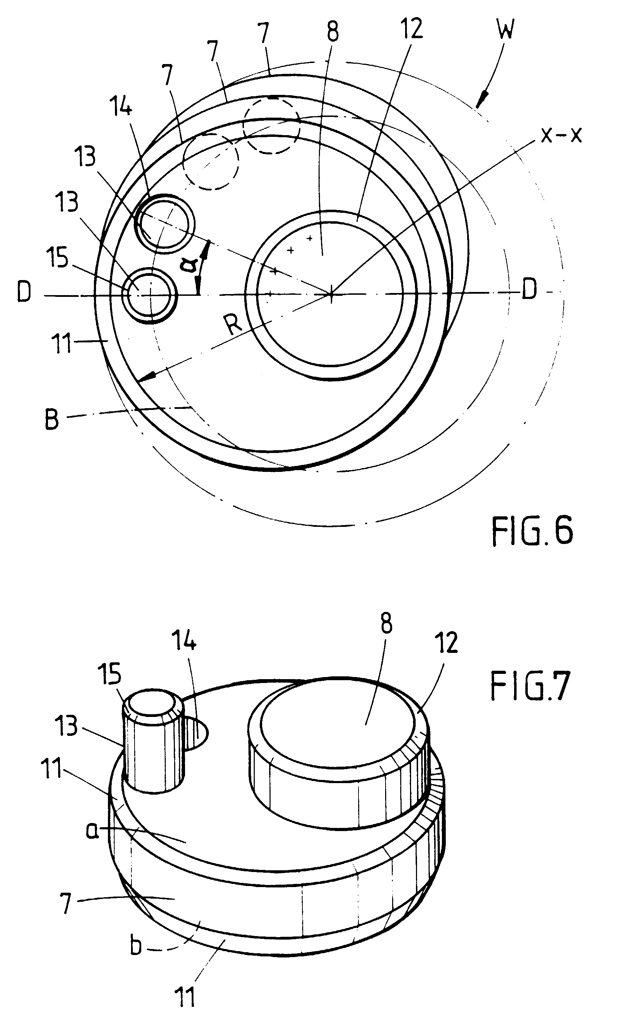

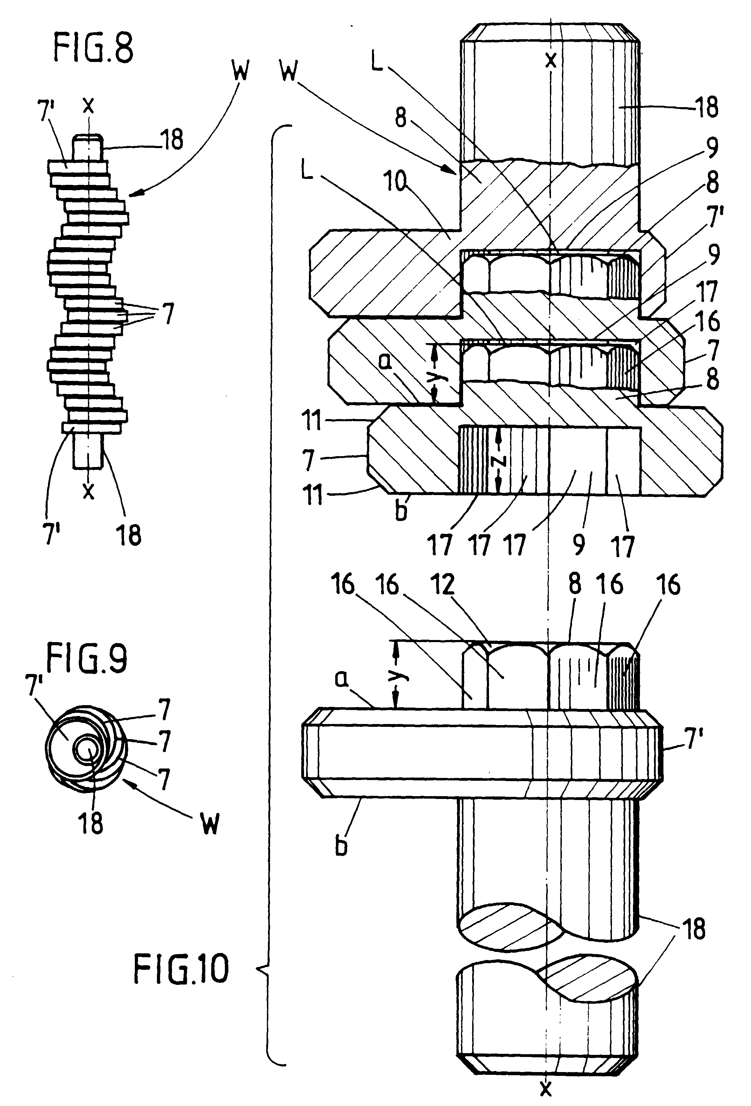

Der axial orientierte Überstand y des in der kreisrunden Exzenterscheibe 7 wurzelnden, exzentrisch liegenden Achsstummels 8 ist kleiner als die in dieser Richtung gemessene Tiefe z der Vertiefung 9. Das führt zu einer satten, tragend flächigen Stapellage der Exzenterscheiben 7, deren Seiten a und b exakt senkrecht zur Achse x-x stehen. Der axiale Abstand zwischen der ebenen Bodenfläche der Vertiefung 9 und der ebenen Stirnfläche des Achsstummels 8 geht deutlich als Lichtspalt L aus den Figuren 5 und 10 hervor.

Wie den besagten Figuren weiter entnehmbar, ist für die Tiefe z etwa dreiviertel der Dicke der Exzenterscheibe 7 genutzt. So verbleibt eine noch hochstabile Ring-Wurzelzone 10 zwischen dem Fußbereich des Achstummels 8 und dem Scheibenkörper.

Beide rotationssymmetrisch verlaufenden Randkanten der Exzenterscheiben 7 sind gefast. Die Fasung trägt das Bezugszeichen 11. Auch die Randkante des exponierten Achsstummels 8 ist bei 12 gefast. Der Rand der Vertiefung 9 behält dagegen im Interesse einer maximal großen Flächenauflage seinen eckigen Übergang.

Die Achsstummel 8 sind den Exzenerscheiben 7 materialeinheitlich angeformt, vorzugsweise im Wege des Spritzverfahrens. Hierbei wird zweckmäßig auf Kunststoff zurückgegriffen. Sollte eine Fertigung im Wege der Prägung aus Metall bevorzugt sein, so ergibt es sich als vorteilhaft, daß das die Vertiefung 9 bildende Volumen als koaxiale Verlagerung den etwa volumengleichen Achsstummel 8 schafft.

Als Mittel der Drehsicherung der zur dargestellten Exzenterwelle W addierten Exzenterscheiben 7 dient ein Steckzapfen 13. Letzterer geht von der einen, mit a bezeichneten Seite aus und erstreckt sich raumparallel jedoch radial beabstandet zur Achse x-x des Achsstummels 8. Der Durchmesser des zylindrischen Steckzapfens 13 entspricht etwa einem Drittel bis einem Viertel des Durchmessers des Achsstummels 8. Die axiale Länge des Steckzapfens 13 fällt etwas geringer aus als die Dicke der Exzenterscheibe 7 beträgt. Zur Fesselung der winkelversetzen Anordnung der Exzenterscheiben 7 tritt besagter Steckzapfen 13 in ein passendes Loch 14 der nächstfolgenden Exzenterscheibe 7 ein. Bezüglich des Loches 14 handelt es sich um eine durchgehende zylindrische Durchbrechung im Sinne einer Bohrung.

Der auch hier materialeinheitlich angeformte Steckzapfen 13 ist endseitig gefast. Er sitzt möglichst in Randnähe der Exzenterscheibe 7, jedoch noch außerhalb der Fasung 11. Wie Figur 6 entnehmbar, stehen Achsstummel 8 und Steckzapfen 13 gemeinsam auf einer Diametralen D-D. Im Uhrzeigersinn folgend liegt dem Steckzapfen 13 einer jeden Exzenterscheibe 7 benachbart das erwähnte Loch 14, und zwar auf dem gleichen Radius-Bogen B stehend wie der Steckzapfen 13. Der die Achse x-x schneidende Radius ist mit R bezeichnet. Der Winkelabstand von Steckzapfen 13 und Loch 14 liegt bei ca. 25°. Er ist mit Alpha bezeichnet.

Die die Drehsicherung bringenden Mittel können auch doppelt und mehr vorgesehen sein, dies auch im Sinne der zur Nutzung des entgegen Uhrzeigersinn vorliegenden Freifeldes zur Diametralen D-D.

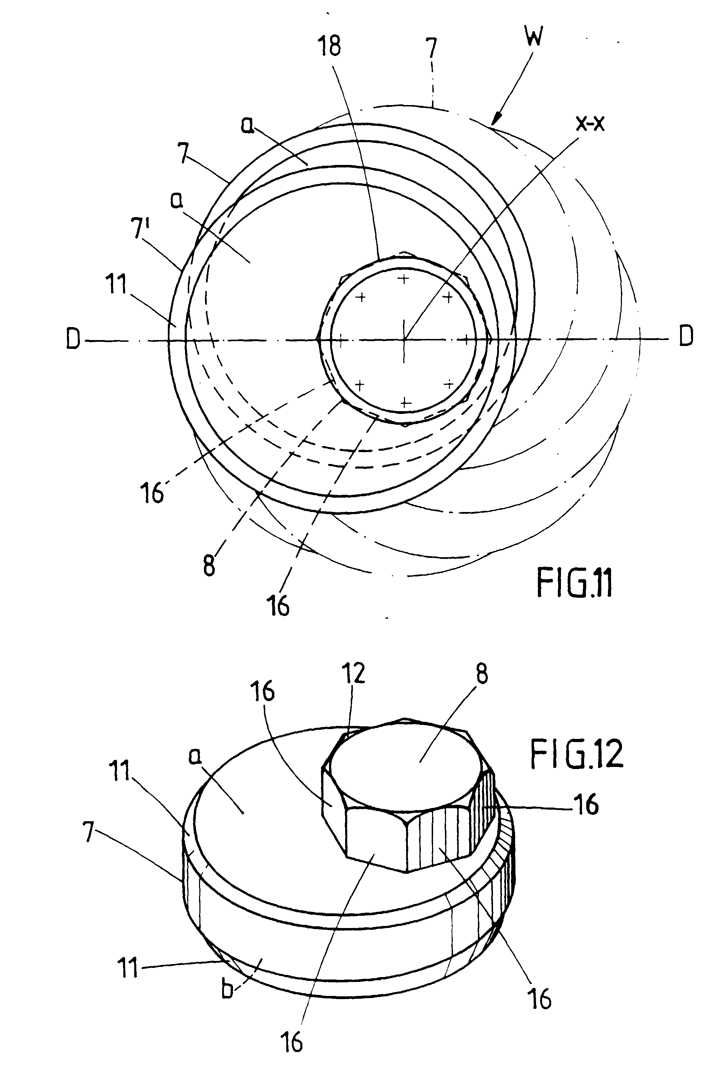

Beim Ausführungsbeispiel gemäß den Figuren 8 bis 12 sind die entsprechenden drehsichernden Mittel am Achsstummel 8 selbst verwirklicht, indem dieser dort nicht wie beim voraufbeschriebenen Ausführungsbeispiel zylindrischer Gestalt ist, sondern eine unrunde, zweckmäßig mehrkantige Mantelwand aufweist. In Anpassung an diese Mehrkäntigkeit der Achsstummel 8 der Exzenterscheiben 7 weisen diese eine entsprechende Mehrkantigkeit auch bezüglich des Querschnitts der Vertiefung 9 auf. Konkret liegt eine achtkantige Struktur zugrunde. Die Mehrkantflächen des Achsstummels 8 tragen das Bezugszeichen 16. Die korrespondierenden Mehrkantflächen der Vertiefung 9 heißen 17. Statt einer gleichwinkligen Achterteilung kann sich die mehr verbreiterte hexagonale Querschnittsform zugrunde liegen, also Ineinandergriff von Außensechskant in Innensechskant.

Es ist verständlich, daß die individuelle Addition der Exzenterscheiben 7 beider Ausführungsbeispiele zugleich die Arbeitslänge der Achse x-x bringt. Körperlich sind die lagerungsbezogenen Mittel dabei so gestaltet, daß die Exzenterscheiben 7 endständig Abschlußscheiben 7' zugeordnet sind. Letztere haben prinzipiell den gleichen Aufbau wie die Exzenterscheiben 7. Sie unterscheiden sich nur dadurch, daß von der einen, oberen Abschlußscheibe 7' im Anschluß an den Achsstummel 8 zylindrischer Gestalt ein querschnittsgleicher Fortsatz anschließt, welcher einen Lagerzapfen 18 bildet. Mit anderen Worten: Der zylindrische Achsstummel 8 ist nach oben hin koaxial zur Vertiefung 9 verlängert. Die andere, unten liegende Abschlußscheibe 7' geht auch vom gleichen Grundtyp aus, nur daß dort statt der nach unten gerichteten Vertiefung 9 in koaxialer Gegenüberlage zum oberseitigen Achsstummel 8 zylindrischer oder mehrkantiger Gestalt ein koaxial dazu liegender, von der anderen Seite b, sprich Unterseite der Exzenterscheibe, ein ebensolcher Lagerzapfen 18 ausgeht. Auch dieser ist zylindrisch.

Alternativ können die Lagerzapfen 18 auch einen geringeren Durchmesser aufweisen als der des zylindrischen Achsstummels 8 hat.

Was das zweite Ausführungsbeispiel in dieser Hinsicht betrifft, so greifen dort die gleichen Mittel. Die Bezugsziffern sind sinngemäß, jedoch ohne textliche Wiederholung, angewandt. Natürlich sind auch dort die Lagerzapfen 18 zylindrisch.

Die so aus zusammengesteckten Formteilen erzielte Exzenterwelle W der einen oder anderen Ausführungsform findet ihre beidendigen Lagerbohrungen 19 in schildartigen Lagerwänden 20 des Einsatzgehäuses 1. Die gegeneinander gerichteten Innenseiten der horizontalen Lagerwände 20 bilden die vertikale Abstützung des Exzenterscheiben-Pakets, indem die jeweils äußere Breitfläche der Abschlußscheiben 7', der Seite a bzw. b der "normalen" Exzenterscheiben 7 vergleichbar, gegen die besagte Innenseite tritt. Das Exzenterscheiben-Paket ist so axial gesichert eingespannt.

Die Lagerbohrungen 19 können mit Lagerbüchsen ausgefüttert sein.

Die beiden horizontal verlaufenden Lagerwände 20 stehen über Innenseiten 21 bringende Vertikalwände 22 in Verbindung. Letztere sind schraubtechnisch und damit reversibel zugeordnet. Die entsprechenden Befestigungsschrauben tragen das Bezugszeichen 23. Sie treten unter Durchsetzen der Vertikalwände 22 in die längsverlaufenden Schmalseiten der Lagerwände 20 ein. Ihre Gewindelöcher heißen 24. Besagte Schmalseiten ruhen auf Tragschultern 25 der Vertikalwände 22, so daß stets ein definierter, das Einspannen und Miterfassen der Schieber 2 sichernder Zuammenhalt gegeben ist.

Die Schieber 2 sind rechteckige Plättchen aus Kunststoff oder Metall. Sie führen sich mit ihren Schmallängsseiten an den parallelen Innenseiten 21 der Vertikalwände 22.

Je eine Exzenterscheibe 7 erstreckt sich im Querschnittsbereich je eines Schiebers 2, der dazu eine dem Durchmesser der Exzenterscheibe angepaßte Durchbrechung 26 aufweist, welche als quer zur schlauchwärts gerichteten Walkbewegung ausgerichtetes Langloch gestaltet ist.

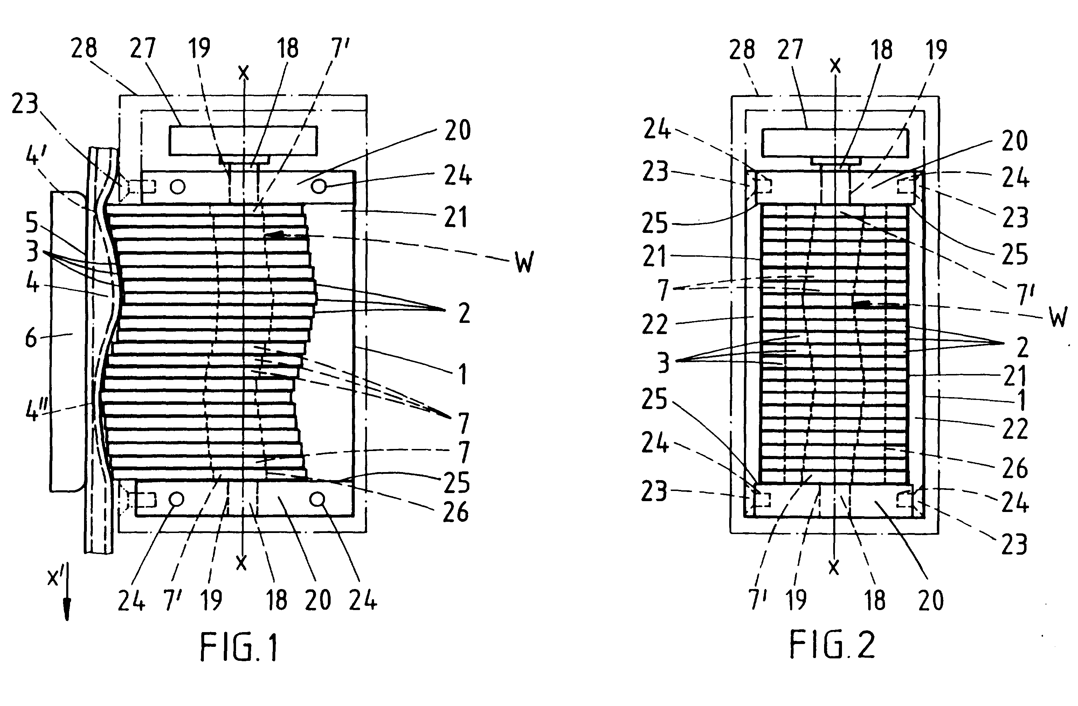

Wie Figur 1 entnehmbar, erhält die Exzenterwelle W über ein mit dem oberen Lagerzapfen 18 verbundenes Zahnrad 27 oder dergleichen ihren Drehantrieb um die vertikale Achse x-x. Das das Einsatzgehäuse 1 aufnehmende Pumpengehäuse ist in strichpunktierter Linienart dargestellt und trägt das Bezugszeichen 28.

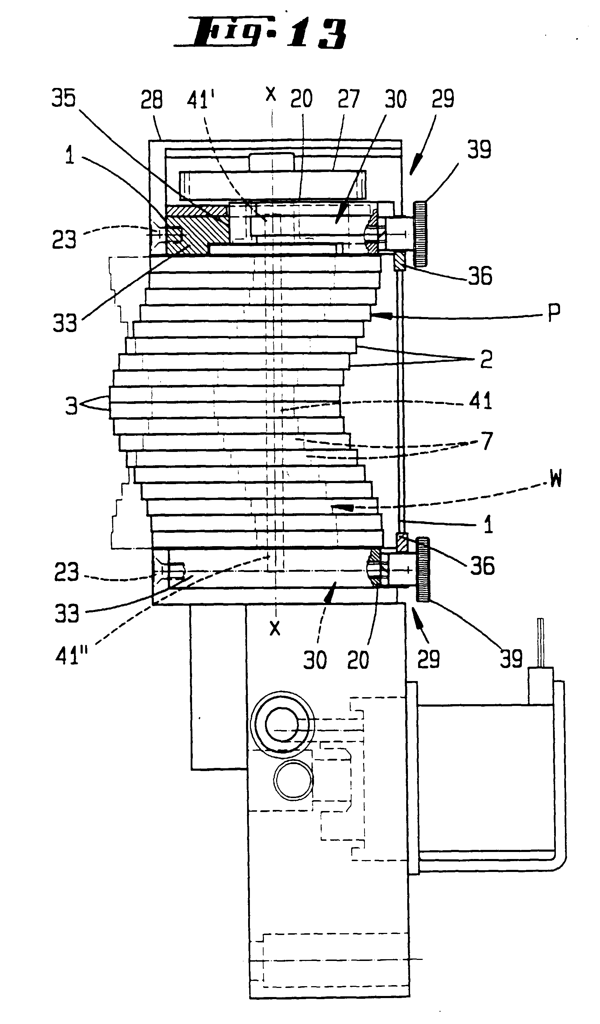

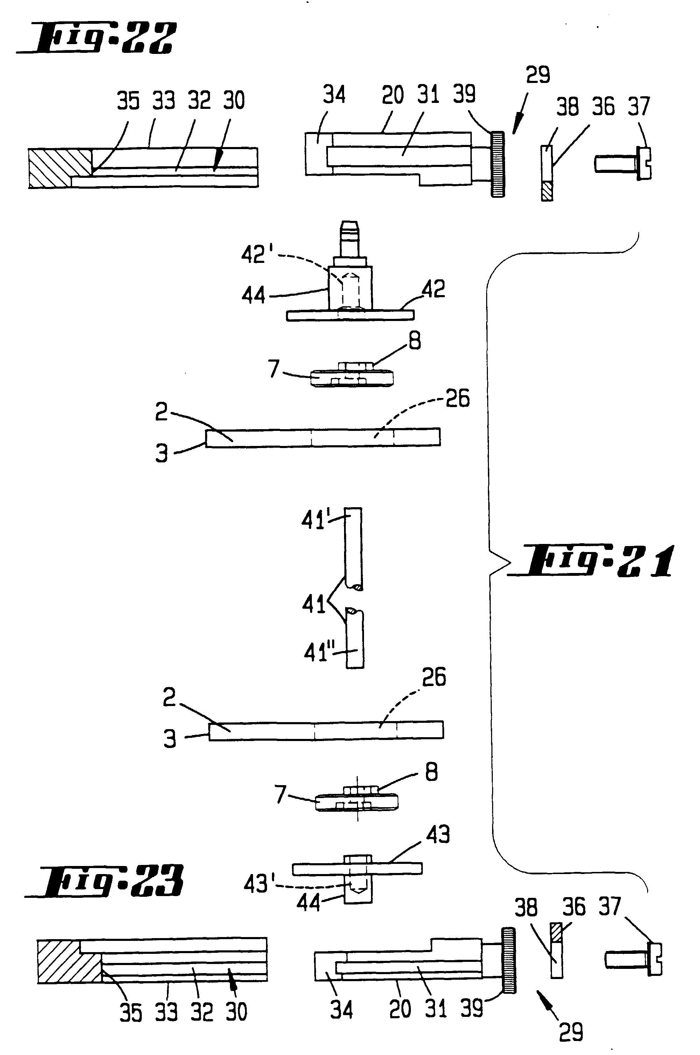

Die Figuren 13 bis 23 geben nun unter Beibehaltung des erläuterten Grundprinzips eine bauliche Lösung an, die im Handumdrehen ein Umrüsten der Schlauchpumpe ermöglicht. Das hat aber zugleich auch montagetechnische Vorteile und solche für die Wartung. Der Fall der Umrüstung betrifft beispielsweise das Einrichten einer geänderten Walkkontur der Schieber 2 und der sie steuernden Exzenterscheiben 7, welche den sogenannten Lamellenblock als Walkmittel bilden. Die Bezugsziffern sind, zum Teil ohne textliche Wiederholungen, sinngemäß angewandt.

Die weiterbildende Struktur besteht darin, daß die übereinander angeordneten Exzenterscheiben 7 und die Schieber 2 durch die beiderends angeordneten Lagerwände 20 zu einem Paket P zusammengefaßt sind. Dieses das Herzstück der Schlauchpumpe darstellende Paket P läßt sich nach Freigabe einer Sperre 29 in einer schlauchabgewandten Richtung aus dem Einsatzgehäuse 1 herausziehen. Das geschieht über eine Schienenführung 30.

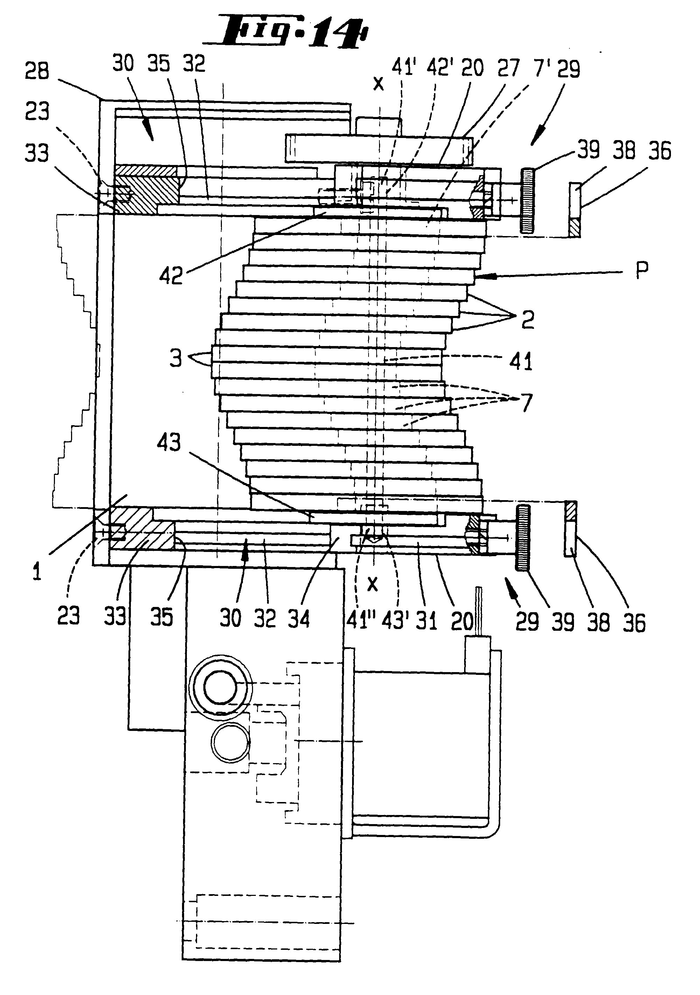

Der paketseitige Anteil dieser Schienenführung 30 beruht auf der Verwendung der den oberen und unteren Abschluß des besagten Pakets P darstellenden Lagerwände 20, welche nun nicht mehr, wie beim vorbeschriebenen Ausführungsbeispiel der Schlauchpumpe, fest mit dem Einsatzgehäuse 1 in Verbindung stehen, sondern beweglich. Dazu befinden sich an den parallel zueinander verlaufenden Längsseiten der beiden Lagerwände 20 horizontale Führungsnuten 31. In letztere greifen formpassend leistenartige Schienen 32 ebenengleich angeordneter Lagerführungsplatten 33 ein. Letztere sind der ortsfeste Bestandteil der Lagerwände 20 respektive der Schienenführung 30. Wie beispielsweise Figur 14 entnehmbar, sind die beiden Lagerführungsplatten 33 über die bereits erwähnten Befestigungsschrauben 23 am bzw. im das Einsatzgehäuse 1 aufnehmenden Pumpengehäuse 28 fixiert. Diese Befestigungsschrauben 23 sind von der Seite her eingeschraubt, an welcher sich der Schlauch 4 erstreckt.

Führungsnuten 31 und Schienen 32 gehen noch in eine weitere Profilierung über, welche ihre gegenseitige Berücksichtigung findet. Zum erleichterten Einfühlen und damit Einführen der Teil des Schlitten-Pakets P bildenden Lagerwände 20 sind diese an ihrem Ende kantengefast. Das führt zu auffälligen, etwa im Winkel von 45° verlaufenden Schrägflanken 34, welche zu einer trapezförmigen oder pfeilförmigen Brustzone der Lagerwände 20 führen.

Die die Lagerwände 20 aufnehmenden, zum Rücken des Einsatzgehäuses 1 hin offenen Nischen der Lagerführungswände 33 tragen das Bezugszeichen 35. Ihr Grund bildet den definierten, funktionsgerechten Einschubanschlag des Pakets P.

Zur Sicherung der aus Figur 13 ersichtlichen Einschubstellung des Pakets P dient die erwähnte Sperre 29, welche die beiden Lagerwände 20 gegen Herausziehen blokkiert. Zur Bildung der dementsprechend paarig vorgesehenen Sperre 29 dient je eine Riegelplatte 36. Letztere wirkt mit Halteschrauben 37 zusammen. Die sind paarig vorgesehen und in passende Gewindebohrungen der Lagerführungsplatten 33 eingeschraubt. Der freistehende, horizontale Schaftabschnitt der Halteschrauben 37 wird von einerseits vertikal offenen Aussparungen 38 der Riegelplatten 36 übergriffen und über die Köpfe der Halteschrauben 37 festgeklemmt. Die Aussparungen 38 der unteren Riegelplatte 36 weisen nach unten, die der oberen nach oben. Es ist verständlich, daß nach Festlegung der Riegelplatten 36 die Nische 35 an der dem Schlauch 4 abgewandten Seite verschlossen ist, also der vom Gesamt-Paket P gebildete Schlitten nicht herausgezogen werden kann.

Zur Freigabe bedarf es eines geringen Zurückschraubens der Halteschrauben 37, so daß die Köpfe leicht gelüftet werden, um die Riegelplatten 36 abnehmen zu können.

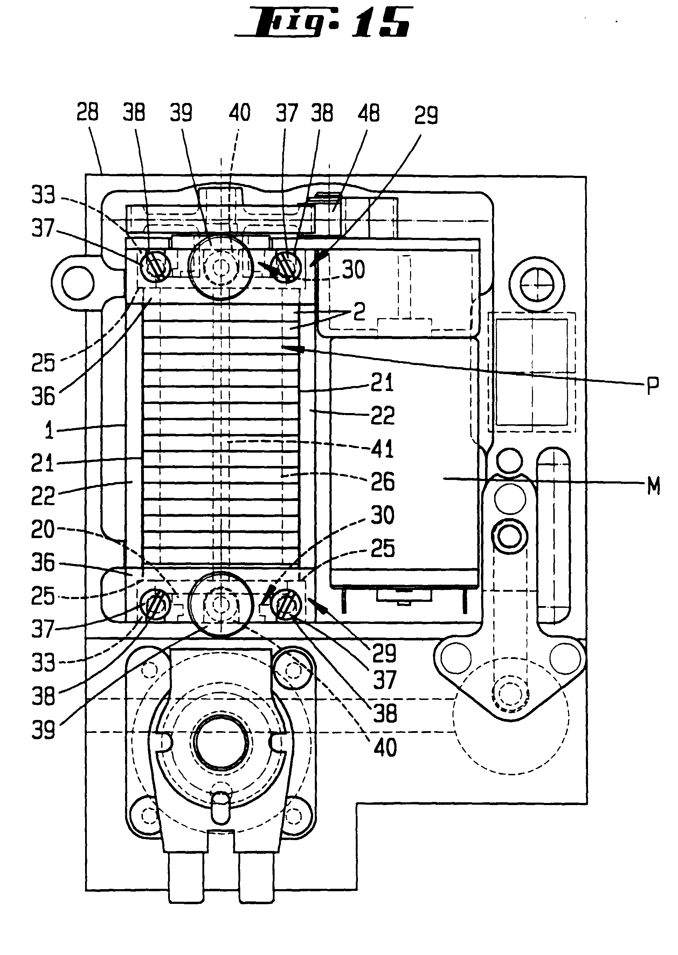

Wie beispielsweise Figur 15 veranschaulicht, sind den Lagerwänden 20 außenseitig Zughandhaben 39 zugeordnet. Es handelt sich um Schrauben mit gerieften Köpfen. Diese erstrecken sich räumlich zwischen den horizontal beabstandeten Halteschrauben 37, also auch im Abdeckungsbereich der Riegelplatte 36, die aber zur Zuordnung der brückenartigen Riegelplatte 36 ebenfalls Aussparungen 40 aufweisen mit dem gleichen beschriebenen Ausrichtungssinn ihrer Öffnungen. Die Zughandhaben 39 bedürfen nicht des geringfügigen Zurückschraubens wie die Halteschrauben 37. Sie sind vielmehr durch eine drehsichernde Unterlegscheibe gehalten.

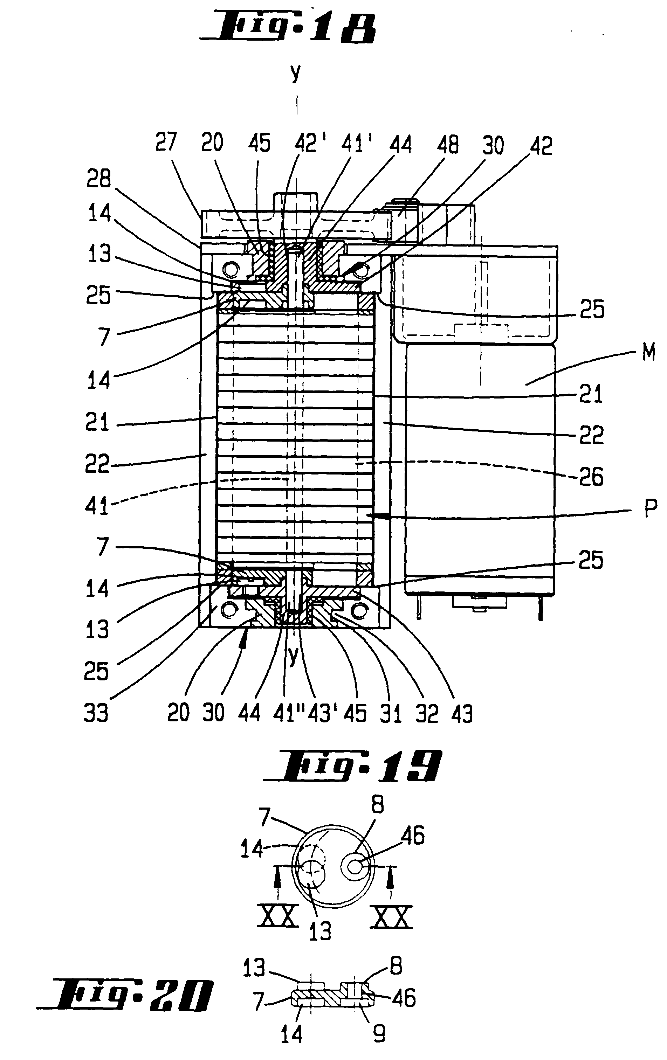

Damit nun das aus dem Walkmittel bestehende, durch die Achsstummel-Steckverbindung schon in einem gewissen Grad zusammengehaltene Paket P nach Herausziehen aus dem Einsatzgehäuse 1 auch bei etwas größeren mechanischen Beanspruchungen nicht ohne weiteres schon zerfällt, ist eine die Exzenterscheiben 7 durchsetzender Verbindungsstab 41 vorgesehen. Dieser reicht mit seinen freien Enden 41' und 41" bis in die Lagerwände 20 hinein. Hier kann eine unmittelbare reibungsschlüssige Verbindung zwischen dem besagten Lagerstab 41 und den Lagerwänden 20 greifen. Bevorzugt und auch im Ausführungsbeispiel dargestellt ist jedoch eine mittelbare insofern, als hier je eine Mitnahme bzw. Anlaufscheibe 42 bzw. 43 zwischengeschaltet ist. Die der oberen schlittenbildenden Lagerwand 20 zugeordnete Mitnahme - bzw. Anlaufscheibe ist mit 42 bezeichnet. Sie lagert mit einer nach oben gerichteten Buchse 44 in einer ausgefütterten Lagerbohrung 45 der dortigen Lagerwand 20 (vergleiche Figur 18). Die Mitnahme- bzw. Anlaufscheibe 42 besitzt exzentrisch zur Buchse 44 ein Loch 14 zum Eintritt des entsprechend liegenden Steckzapfens 13 der unmittelbar darunterliegende Exzenterscheibe 7 die, ihrerseits nach unten hin offen, wiederum ein Loch 14 aufweist, das als Sackbohrung realisiert sein kann.

Unter Berücksichtigung der oben erläuterten Achsstummel 8 befindet sich im Zentrum der Mitnahme-Anlaufscheibe 42, nach unten hin öffnend, eine der Vertiefung 9 der Exzenterscheiben 7 entsprechende Vertiefung 9.

Unten liegen ähnliche Verhältnisse vor, indem auch die dortige Mitnahme- bzw. Anlaufscheibe 43 einen Steckzapfen 13 hat, der, hier von einem Kopf einer Schraube ausgebildet, in das korrespondierende Loch 14, gebildet nun von einer Sackbohrung der darüber liegenden Exzenterscheibe 7, eingreift.

Die Buchse 44 der unteren Mitnahme- bzw. Anlaufscheibe 43 setzt sich nach oben hin, also den Scheibenkörper überragend, in einen zentralen, dem Achsstummel 8 der Exzenterscheiben 7 entsprechende Achsstummel fort. Auch die Lagerbohrung 45 der unteren Lagerwand 20 ist ausgefüttert. Hieraus resultiert eine vorteilhaft nutzbare Haftreibung, über die sich die schlittenbildenden Lagerwände 20 bei herausgenommenem Paket P an den wie Halteschilde wirkenden Mitnahme- bzw. Anlaufscheiben 42,43 via Verbindungsstab 41 unter sandwichartigem Zwischenfassen der Steuerteile 2,7 halten.

Die Aufnahmebohrungen der beiden genannten Mitnahmebzw. Anlaufscheiben 42, 43 sind mit 42' bzw. 43' bezeichnet. Es handelt sch um Sackbohrungen, sie wirken also steckbegrenzend. Ihre Randkante ist gefast.

Bleibt noch auszuführen, daß der Verbindungsstab 41 in der gemeinsamen Achse x-x der Exzenterscheiben 7 verläuft. Deren Achsstummel 8 ist zum Durchtritt des zylindrisch gestalteten Lagerwände-Verbindungsstabes 41 zentral durchbohrt. Die entsprechende Bohrung 46 reicht bis in die jeweils darunter liegende Vertiefung 9 hinein bzw. ist dorthin offen.

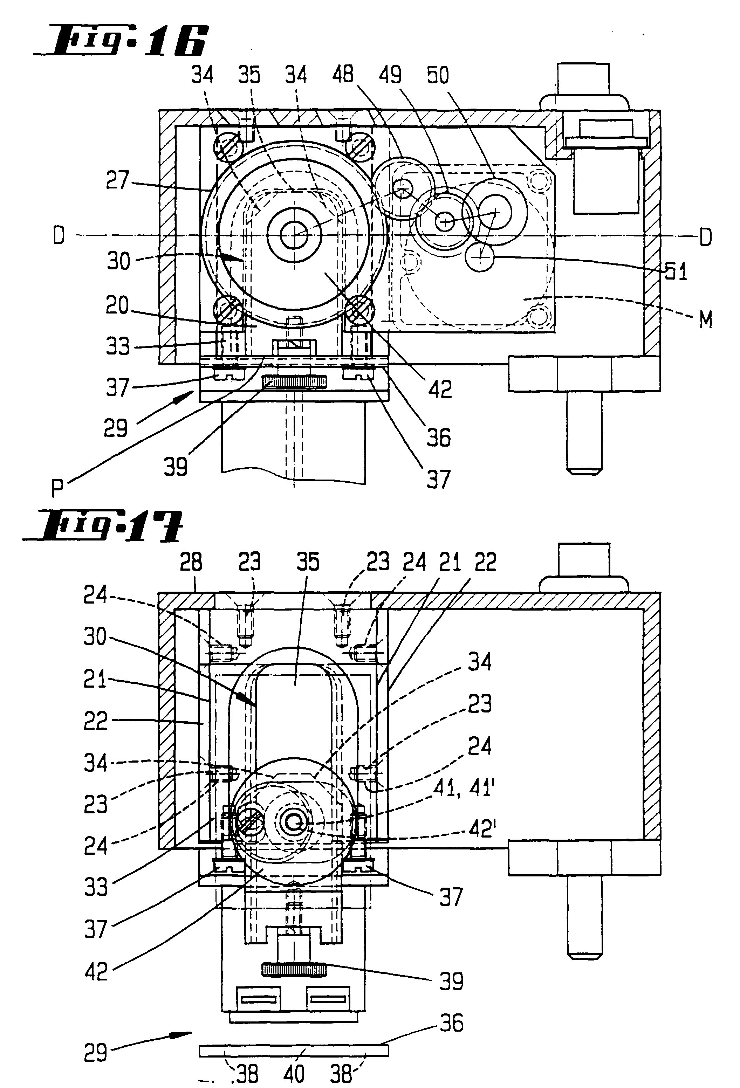

Das obere Ende der Buchse 44 der oberen Mitnahme- bzw. Anlaufscheibe 42 greift drehmitnehmend am Drehantriebsrad, also Zahnrad 27 der Schlauchpumpe an. Die aus Figur 16 ersichtlichen Zwischenräder 48, 49 und 50 sowie das Antriebsritzel 51 des Antriebsmotors M der Schlauchpumpe sind aber so angeordnet, daß sie die Auszugbewegung des Herzstücks der Schlauchpumpe nicht behindern, so daß eine selbsttätige Trennung des Exzenterscheiben-Drehantriebsrades 27 bei Herausnahme des Pakets P gegeben ist. Es braucht kein Rad aus dem Weg genommen zu werden. Das drehgebende Zahnrad 48 erstreckt sich in Zugrichtung hinter der Diametralen D-D des Zahnrades 27 (vergleiche Figur 16).

Die Handhabung der Demontage ist, kurz zusammengefaßt, wie folgt: Nach geringfügigem Lösen der Halteschrauben 37 lassen sich die Riegelplatten 36 entfernen (vergleiche Figur 17) unter Benutzung einer oder beider Zughandhaben 39 läßt sich das gesamte Paket P wie ein Schlitten aus der Schienenführung 30 herausziehen. Der geschilderte Zusammenhalt über die Verbindungsstange 41 vermeidet den Zerfall der Teile. Ein entsprechend gestaltetes Austauschwerk kann hiernach in umgekehrter Reihenfolge in das Einsatzgehäuse 1 eingefügt werden, wobei sich die Zuspitzung der schlittenbildenden Elemente, also der Lagerwände 20, zuordnungserleichternd erweist.

Nach Sicherung über die Sperre 29 liegt Betriebsbereitschaft vor.

## Patentansprüche

1. Schlauchpumpe mit in Erstreckungsrichtung (Pfeil x') des Schlauches (4) hintereinander angeordneten Schiebern (2), welche mit ihrer Stirnfläche (3) den Schlauch (4) in rhythmischem Wechsel beaufschlagen und von winkelversetzt angeordneten Exzenterscheiben (7) gesteuert sind, die sich um eine gemeinsame Achse (x-x) drehen, dadurch gekennzeichnet, daß die gemeinsame Achse (x-x) von Achsstummeln (8) gebildet ist, die jeweils auf der einen Seite (a) einer Exzenterscheibe (7) vorstehen und in korrespondierende Vertiefungen (9) der jeweils benachbart liegenden Exzenterscheibe (7) eintreten.

2. Schlauchpumpe nach Anspruch 1, dadurch gekennzeichnet, daß die Achsstummel (8) den aus Kunststoff bestehenden Exzenterscheiben (7) materialeinheitlich angeformt sind und benachbart liegen zu ebenfalls materialeinheitlich angeformten Steckzapfen (13), die zur Fesselung der winkelversetzten Anordnung der Exzenterscheiben (7) jeweils in Löcher (14) benachbarter Exzenterscheiben (7) eintreten.

3. Schlauchpumpe nach einem oder mehreren der vorhergehenden Ansprüche, dadurch gekennzeichnet, daß der Überstand (y) der Achsstummel (8) kleiner ist als die Tiefe (z) der Vertiefungen (9).

4. Schlauchpumpe nach einem oder mehreren der vorhergehenden Ansprüche, dadurch gekennzeichnet, daß den Exzenterscheiben (7) endständig Abschlußscheiben (7') zugeordnet sind, von denen die eine koaxial zur Vertiefung (9) einen Lagerzapfen (18) und die andere in koaxialer Gegenüberlage zum Achsstummel (8) ebenfalls einen Lagerzapfen (18) aufweist.

5. Schlauchpumpe nach einem oder mehreren der vorhergehenden Ansprüche, dadurch gekennzeichnet, daß die axiale Verspannung des Exzenterscheiben-Pakets durch Abstützung der äußeren Breitfläche der Abschlußscheiben (7') an Lagerwänden (20) der Lagerzapfen (19) erzielt. ist.

6. Schlauchpumpe nach einem oder mehreren der vorhergehenden Ansprüche, gekennzeichnet, durch eine Mehrkantigkeit der Achsstummel (8) und angepaßte Mehrkantigkeit der korrespondierenden Vertiefungen (9).

7. Schlauchpumpe nach einem oder mehreren der vorhergehenden Ansprüche, dadurch gekennzeichnet, daß die übereinander angeordneten Exzenterscheiben (7) und die Schieber (2) durch beiderends angeordnete Lagerwände (20) zu einem Paket (P) zusammengefaßt sind, welches über eine Schienenführung (30) der einen Schlitten bildenden Lagerwände (20) aus dem Einsatzgehäuse (1) herausziehbar ist.

8. Schlauchpumpe nach einem oder mehreren der vorhergehenden Ansprüche, gekennzeichnet, durch eine selbsttätige Trennung des Exzenterscheiben-Drehantriebrades (Zahnrad 27) bei Herausnahme des Pakets (P).

9. Schlauchpumpe nach einem oder mehreren der vorhergehenden Ansprüche, gekennzeichnet, durch eine die Lagerwände (20) gegen Herausziehen sichernde Sperre (29).

10. Schlauchpumpe nach einem oder mehreren der vorhergehenden Ansprüche, dadurch gekennzeichnet, daß die Sperre (29) als Riegelplatte (36) ausgebildet ist.

11. Schlauchpumpe nach einem oder mehreren der vorhergehenden Ansprüche, dadurch gekennzeichnet, daß beide übereinander angeordneten Lagerwände (20) durch eine Sperre (29) gesichert sind.

12. Schlauchpumpe nach einem oder mehreren der vorhergehenden Ansprüche, gekennzeichnet durch einen die Exzenterscheiben (7) durchsetzenden Lagerwände-Verbindungsstab (41), der bis in die Lagerwände (20) reicht.

13. Schlauchpumpe nach einem oder mehreren der vorhergehenden Ansprüche, gekennzeichnet durch eine reibungsschlüssige Verbindung zwischen Verbindungsstab (41) und Lagerwänden (20).

14. Schlauchpumpe nach einem oder mehreren der vorhergehenden Ansprüche, dadurch gekennzeichnet, daß der Verbindungsstab (41) in der gemeinsamen Achse (x-x) der Exzenterscheiben (7) verläuft.

15. Schlauchpumpe nach einem oder mehreren der vorhergehenden Ansprüche, dadurch gekennzeichnet, daß die Schienen (32) der Schienenführung (30) an am Einsatzgehäuse (1) festlegbare Lagerführungsplatten (33) ausgebildet sind.

16. Schlauchpumpe nach einem oder mehreren der vorhergehenden Ansprüche, dadurch gekennzeichnet, daß die Stirnenden der Lagerführungsplatten (33) Halteschrauben (37) für die Riegelplatte (36) tragen.

## Claims

1. Hose pump with slides (2), arranged one behind the other in the direction of extension (arrow x') of the hose (4), which act on the hose (4) with their front faces (3) in rhythmic change and are controlled by eccentric discs (7) arranged angularly offset and which rotate about a common axis (x-x), characterised in that the common axis (x-x) is formed of axle stubs (8) which in each case project on one side (a) of an eccentric disc (7) and engage in corresponding recesses (9) of the respective adjacent disc (7).

2. Hose pump according to claim 1, characterised in that the axle stubs (8) are moulded to the eccentric discs (7) consisting of a plastic which is of uniform material and which are situated adjacent to insertion pins (13) which are moulded on to material which is similarly of uniform material, for capturing the angularly offset arrangement of the eccentric discs (7) the insertion pins (13) in each case engage in holes (14) of adjacent eccentric discs (7).

3. Hose pump according to one or more of the preceding claims, characterised in that the excess (y) of the axle stub (8) is smaller than the depth (z) of the recesses (9).

4. Hose pump according to one or more of the preceding claims, characterised in that the eccentric discs (7) at their ends are provided with terminal discs (7') of which one has a bearing pin (18) coaxial to the recess (9) and the other one also has a bearing pin (18) in a coaxial position opposite to the axle stub (8).

5. Hose pump according to one or more of the preceding claims, characterised in that the axial bracing of the eccentric disc packet is achieved through support of the outer broad surface of the terminal discs (7') on bearing walls (20) of the bearing pins (19).

6. Hose pump according to one or more of the preceding claims, characterised by the axle stubs (8) being polygonal and the corresponding recesses (9) being adapted to this polygonal shape.

7. Hose pump according to one or more of the preceding claims, characterised in that the eccentric discs (7) arranged one above the other and the slides (2) are combined into one packet (P) by means of bearing walls (20) arranged on both ends, which packet (P) can be pulled out of the housing (1) via a rail guide (30) of the carriage-forming bearing walls (20).

8. Hose pump according to one or more of the preceding claims, characterised by an automatic separation of the eccentric disc - rotary drive wheel (tooth wheel 27) on removal of the packet (P).

9. Hose pump according to one or more of the preceding claims, characterised by a stop means (29) for preventing the bearing walls (20) from being pulled out.

10. Hose pump according to one or more of the preceding claims, characterised in that the stop means (29) is constructed to be a locking plate (36).

11. Hose pump according to one or more of the preceding claims, characterised in that both bearing walls (20) arranged one above the other are secured by a stop means (29).

12. Hose pump according to one or more of the preceding claims, characterised by a bearing wall connecting bar (41) passing through the eccentric discs (7) which reaches into the bearing walls (20).

13. Hose pump according to one or more of the preceding claims, characterised by a frictional connection between connecting bar (41) and the bearing walls (20).

14. Hose pump according to one or more of the preceding claims, characterised in that the connecting bar (41) runs along the common axis (x-x) of the eccentric discs (7).

15. Hose pump according to one or more of the preceding claims, characterised in that the rails (32) of the rail guide (30) are constructed as bearing guide plates (33) which can be fastened to the housing (1).

16. Hose pump according to one or more of the preceding claims, characterised in that the front ends of the bearing guide plates (33) carry retaining screws (37) for the locking plate (36).

## Revendications

1. Pompe péristaltique présentant des coulisses (2) disposées l'une derrière l'autre selon la direction d'extension (flèche x') du tuyau (4), qui sollicitent au moyen de leur face frontale (3), le tuyau (4) selon une séquence périodique et qui sont commandées par des disques excentriques angulairement décalés (7), qui tournent autour d'un axe commun (x-x), caractérisée en ce que l'axe commun (x-x) est constitué de tronçons d'axes (8) qui présentent chacun d'un côté (a) un disque excentrique (7) et qui pénetrent dans des évidements correspondants (9) du disque excentrique avoisinant (7).

2. Pompe péristaltique selon la revendication 1, caractérisée en ce que les tronçons d'axe (8) sont formés monoblocs avec les disques excentriques (7) réalisés en matière synthétique et sont situés à proximité d'une broche également formée monobloc du même matériau (13) qui, afin de fixer la disposition avec décalage angulaire des disques excentriques (7), pénètre dans chaque cas dans un trou (14) des disques excentriques (7) avoisinants.

3. Pompe péristaltique selon une ou plusieurs des revendications précédentes, caractérisée en ce que la dimension de saillie (y) du tronçon d'axe (8) est inférieure à la profondeur (z) des évidements (9).

4. Pompe péristaltique selon une ou plusieurs des revendications précédentes, caractérisée en ce que des disques de terminaison (7'), situés aux extrémités, sont associés aux disques excentriques (7), l'un des disques de terminaison (7') présentant un axe de pivotement (18) qui est coaxial avec l'évidement (9), et l'autre présentant, disposé en opposition au tronçon d'axe (8) et de façon coaxiale par rapport à celui-ci, également un axe de pivotement (18).

5. Pompe péristaltique selon une ou plusieurs des revendications précédentes, caractérisée en ce que le maintien axial du paquet de disques excentriques est obtenu par appui des surfaces extérieures larges des disques de terminaison (7') sur des parois des paliers (20) des tourillons de pivotement (19).

6. Pompe péristaltique selon une ou plusieurs des revendications précédentes, caractérisée en ce que le tronçon d'axe (8) présente une pluralité de faces et les évidements correspondants (9) présentent une pluralité de faces adaptées.

7. Pompe péristaltique selon une ou plusieurs des revendications précédentes, caractérisée en ce que les disques excentriques (7) disposés les uns au-dessus des autres ainsi que les coulisses (2) sont réunis, au moyen de parois de palier (20) disposées aux deux extrémités, pour former un paquet (P) susceptible d'être retiré de son boîtier d'installation (1) via un guidage à rails (30) des parois de palier (20) qui forme un glissoir.

8. Pompe péristaltique selon une ou plusieurs des revendications précédentes, caractérisée par une séparation automatique de la roue d'entraînement en rotation des disques excentriques (roue dentée 27) lors de l'enlèvement du paquet (P).

9. Pompe péristaltique selon une ou plusieurs des revendications précédentes, caractérisée par un verrou (29) protégeant contre le retrait par glissement des parois de palier (20).

10. Pompe péristaltique selon une ou plusieurs des revendications précédentes, caractérisée en ce que le verrou (29) est réalisé en forme de plaque de verrouillage (36).

11. Pompe péristaltique selon une ou plusieurs des revendications précédentes, caractérisée en ce que les deux parois de palier (20) disposées l'une au-dessus de l'autre sont verrouillées au moyen d'un organe de blocage (29).

12. Pompe péristaltique selon une ou plusieurs des revendications précédentes, caractérisée par une tige de liaison (41) reliant les parois de palier qui traverse les disques excentriques (7) et qui s'étend jusque dans les parois de palier (20).

13. Pompe péristaltique selon une ou plusieurs des revendications précédentes, caractérisée par une liaison par friction entre la tige de liaison (41) et les parois de palier (20).

14. Pompe péristaltique selon une ou plusieurs des revendications précédentes, caractérisée en ce que la tige de liaison (41) est disposée selon l'axe commun (x-x) des disques excentriques (7).

15. Pompe péristaltique selon une ou plusieurs des revendications précédentes, caractérisée en ce que les rails (32) du système de guidage à rails (30) sont formés sur des plaques de guidage de palier (33) susceptibles d'être montées à la position voulue sur le boîtier d'insertion (1).

16. Pompe péristaltique selon une ou plusieurs des revendications précédentes, caractérisée en ce que les extrémités frontales des plaques de guidage de palier (33) portent des vis de montage (37) pour la plaque de verrouillage (36).
